# EUROPÄISCHE PATENTANMELDUNG

(11) **EP 4 414 569 A2**
(43) Veröffentlichungstag der Anmeldung: **14.08.2024**
(21) Anmeldenummer: 23188025.3
(22) Anmeldetag: 27.07.2023
(51) Int. Cl.: F16B 12/10

(54) **VERBINDUNGSBESCHLAG**

(30) Priorität: 13.02.2023 DE 202023100670 U
(71) Anmelder: Langhorst, Franz-Josef, 59555 Lippstadt (DE)
(72) Erfinder: Langhorst, Franz-Josef, 59555 Lippstadt (DE)
(74) Vertreter: Schober, Mirko

(57) **Zusammenfassung**

Der Verbindungsbeschlag (1) zum Einbringen in eine Aufnahme (62) eines ersten Möbelteils (6) in einer Einschubrichtung (X) weist einen Grundkörper (2) mit einer Öffnung (22) zur Aufnahme eines mit einem zweiten Möbelteil verbindbaren Verbindungselements, insbesondere Bolzens auf. Der Grundkörper (2) umfasst ein Fixierelement (5) zum Fixieren des Verbindungselements in dem Grundkörper (2). Der Verbindungsbeschlag (1) umfasst ein sich an den Grundkörper (2) in der Einschubrichtung (X) axial anschließendes Einschraubgewinde (33), welches eine durch die Öffnung (22) zugängliche und von der Öffnung (22) in Einschubrichtung (X) beabstandete erste Werkzeugaufnahme (32) aufweist.

## Beschreibung

Die Erfindung betrifft einen Verbindungsbeschlag, eine Möbelteilverbindungsanordnung und ein Schraubwerkzeug.

Möbelteile, wie beispielsweise Korpuswände, Zwischenböden und dergleichen, werden in der Regel durch Verbindungsbeschläge miteinander verbunden und bilden dann eine Möbelteilverbindungsanordnung. Eine solche ist beispielsweise aus DE 10 2015 219 778 A1 bekannt. Grundlage dieser Möbelteilverbindungsanordnung ist die Verbindung zweier Bauteile, wobei in einem ersten Möbelteil eine Aufnahme vorgesehen ist, in welche ein Verbindungsbeschlag in Gestalt eines Einsatzteils eingeschoben und darin fixiert wird. Dieses Einsatzteil dient dazu, einen Exzenterbolzen, der an einem weiteren Möbelteil befestigt ist, aufzunehmen und mittels eines im Einsatzteil drehbar angeordneten Exzenterbeschlags zu fixieren. Das Einsatzteil wird in der Regel in der Schmalseite eines Möbelteils, in der Regel in der Schmalseite einer Möbelplatte, in eine entsprechende Aussparung eingesetzt. Der Vorteil dieser Anordnung ist, dass im Möbelteil selbst lediglich Löcher mit kleinem Durchmesser erforderlich sind, um ein Werkzeug zum Fixieren der Verbindung einzuführen. Das bewirkt eine optische Verschönerung der Sichtseiten von Möbelteilen, weil in Sichtseiten durch die genannte Konstruktion weniger stark auftragende Öffnungen realisierbar sind. Da es toleranzbedingt immer wieder Abweichungen gibt, ist es hilfreich, die Aufnahme etwas tiefer auszuführen als das Einsatzteil in Einschubrichtung lang ist. Dadurch kann es natürlich dazu kommen, dass das Einsatzteil bei der Montage zu tief in die Aufnahme eingeschoben wird. Es gibt unterschiedliche Möglichkeiten, das Einsatzteil im Möbelteil zu fixieren und dabei so auszurichten, dass das Fixierelement mit einem Werkzeug von außen zugänglich ist. Beispielsweise kann das Einsatzteil in das Möbelteil eingeschraubt oder eingeklebt werden.

Bei der Einschraublösung, bei der am Einsatzteil ein Gewinde angeordnet ist, gilt es zu beachten, dass der Einschraubvorgang einerseits das Einsatzteil und andererseits das Möbelteil nicht beschädigt, da dadurch die Stabilität der Möbelteilverbindungsanordnung leidet.

Aufgabe der vorliegenden Erfindung ist es daher, einen Verbindungsbeschlag anzugeben, bei dessen Befestigung an einem Möbelteil dieses selbst und auch der Verbindungsbeschlag nicht beschädigt wird.

Gelöst wird diese Aufgabe durch einen Verbindungsbeschlag mit den Merkmalen des Anspruchs 1. Vorteilhafte Ausführungsformen finden sich in den Unteransprüchen.

Der erfindungsgemäße Verbindungsbeschlag dient zum Einbringen in eine Aufnahme eines ersten Möbelteils in einer Einschubrichtung. Der Verbindungsbeschlag weist dazu einen Grundkörper mit einer Öffnung zur Aufnahme eines mit einem zweiten Möbelteil verbindbaren Verbindungselements, insbesondere Bolzens, auf. Der Grundkörper umfasst ein Fixierelement zum Fixieren des Verbindungselements in dem Grundkörper. Umfassen bedeutet nicht, dass das Fixierelement untrennbar mit dem Grundkörper verbunden sein muss. Es kann nach einer bevorzugten Ausführungsform in den Grundkörper eingeschraubt sein. Der Verbindungsbeschlag umfasst weiter ein sich an den Grundkörper in der Einschubrichtung axial anschließendes Einschraubgewinde. Dieses weist eine durch die Öffnung zugängliche und von der Öffnung in Einschubrichtung beabstandete erste Werkzeugaufnahme auf.

Besonders vorteilhaft ist dabei, dass die Werkzeugaufnahme so angeordnet ist, dass die Kraft, die ein darin aufgenommenes Schraubwerkzeug auf den Verbindungsbeschlag ausübt, direkt in den Abschnitt eingeleitet werden kann, an welchem das Einschraubgewinde angeordnet ist. Eine Krafteinleitung erfolgt also unmittelbar und nicht mittelbar über den Grundkörper. Dadurch wird vermieden, dass zwischen Einschraubgewinde und Grundkörper beim Einschrauben Spannungen entstehen, die zur Beschädigung des Verbindungsbeschlages führen können. Zudem lässt sich der Grundkörper verhältnismäßig in axialer Einschubrichtung betrachtet, relativ kurz halten, so dass auch Material eingespart werden kann. Der Grundkörper muss lediglich so bemessen sein, dass - bevorzugt in seiner Wandung - wenigstens eine Aufnahme für das Fixierelement untergebracht ist.

Bevorzugt ist vorgesehen, dass die erste Werkzeugaufnahme einen Abstand von der Öffnung aufweist und bevorzugt im Übergangsbereich von Einschraubgewinde und Grundkörper angeordnet ist. So lässt sich die Krafteinleitung durch ein Schraubwerkzeug am besten auf das Einschraubgewinde übertragen.

Der Verbindungsbeschlag kann einstückig ausgebildet sein, indem Einschraubgewinde und der Grundkörper einstückig ausgebildet sind. Eine weitere Ausführungsform sieht vor, dass das Einschraubgewinde als Einschraubmuffe - z. B. als Rampamuffe - ausgebildet ist, die mit einem in der in Einschubrichtung vorauseilenden Stirnseite des Grundkörpers vorgesehenen Gegengewinde im Grundkörper verschraubt oder - auch ohne Gewinde - mit dem Grundkörper drehbar verbunden ist. Auf diese Weise ist es möglich, das Einschraubgewinde in das erste Möbelteil einzuschrauben, ohne zwingend den Grundkörper mitzudrehen. Dies kann bei der Positionierung des Grundkörpers und der darin vorhandenen Aufnahme für das Fixierelement relativ zu einem Loch in dem ersten Möbelteil helfen, um das Loch mit der Aufnahme zu fluchten und so das Fixieren des Fixierelements an dem Verbindungselement des anderen Möbelteils zu ermöglichen.

Weiter kann die erste Werkzeugaufnahme einstückig mit dem das Einschraubgewinde aufweisenden Teil des Verbindungsbeschlages ausgebildet sein. Hierdurch wird eine besonders gute Kraftübertragung vom Schraubwerkzeug auf das Einschraubgewinde erzielt.

Bei mehrteiliger Ausführung des Verbindungsbeschlages kann vorgesehen sein, dass der Grundkörper einen Anschlag zur Anlage der Einschraubmuffe aufweist. Dies dient dazu, die relative Bewegung der beiden Teile zu begrenzen.

Das Fixierelement ist bevorzugt eine in wenigstens eine im Grundkörper vorgesehene Gewindebohrung einsetzbare oder eingesetzte Fixierschraube oder Madenschraube. Bevorzugt verläuft dabei die axiale Richtung der Gewindebohrung senkrecht zur Einschubrichtung. Natürlich können mehrere Gewindebohrungen über den Umfang des Grundkörpers, beispielsweise in Abständen von 90°, 60°, 120° oder 180° verteilt sein, was bei der oben beschriebenen fluchtenden Ausrichtung mit dem Loch im ersten Möbelteil hilfreich sein kann.

Bevorzugt weist der Grundkörper eine Hüllfläche oder Außenkontur mit kreisförmigem Querschnitt auf. Auf diese Weise kann sich der Grundkörper beim Eindrehen des Einschraubgewindes mitdrehen.

Es sind grundsätzlich verschiedene Materialien für den erfindungsgemäßen Verbindungsbeschlag denkbar, z. B. Kunststoff. Nach einer bevorzugten Ausführungsform ist der Grundkörper und/oder das Einschraubgewinde aus einem Metallmaterial, bevorzugt einem metallischen Vollmaterial oder Gussmaterial, ausgebildet. Dies erlaubt eine besonders stabile Ausführung, so dass der Verbindungsbeschlag Kräfte von mindestens 500 N aufnehmen und weiterleiten kann.

Nach einer vorteilhaften Ausführungsform kann vorgesehen sein, dass sich in Einschubrichtung an den Abschnitt mit der ersten Werkzeugaufnahme eine Axialbohrung zur Aufnahme des Abschnitts einer Werkzeugspitze anschließt. Auf diese Weise ist es möglich, nicht nur das Einschraubgewinde, sondern auch das Fixierelement mit einem einzigen Werkzeug festzuziehen. Dabei ist es insbesondere von Vorteil, wenn die Axialbohrung einen geringeren Durchmesser als die erste Werkzeugaufnahme aufweist. Bei dieser Ausführungsform ist es möglich, ein entsprechendes Schraubwerkzeug so auszugestalten, dass es sich zu seinem vom Griff entfernt liegenden Ende verjüngt. Der vordere Abschnitt könnte dann in die Axialbohrung eintauchen, während ein anderer Abschnitt eines Schraubwerkzeugs in die erste Werkzeugaufnahme eingreift.

Die Erfindung betrifft daher ein Schraubwerkzeug zur Montage eines oben beschriebenen Verbindungsbeschlages. Das Schraubwerkzeug weist dazu einen ersten Eingriffsabschnitt zum form- und/oder kraftschlüssigen Eingreifen in eine erste Werkzeugaufnahme und einen zweiten Eingriffsabschnitt zum form- und/ oder kraftschlüssigen Eingreifen in eine weitere, von der ersten Werkzeugaufnahme verschiedene zweite Werkzeugaufnahme auf. So kann mit einem einzigen Werkzeug sowohl der Verbindungsbeschlag in ein erstes Möbelteil eingeschraubt als auch das Fixierelement so montiert werden, dass es ein Verbindungselement in dem Grundkörper hält.

Vorteilhafterweise kann vorgesehen sein, dass das Schraubwerkzeug ein von einem Griffabschnitt entferntes Ende aufweist, wobei der zweite Eingriffsabschnitt näher an diesem Ende angeordnet ist und einen geringeren Hüllflächendurchmesser aufweist als der erste Eingriffsabschnitt.

Schließlich betrifft die Erfindung eine Möbelteilverbindungsanordnung mit einem ersten Möbelteil und einem damit verbundenen zweiten Möbelteil sowie einem oben beschriebenen Verbindungsbeschlag. Dabei ist in einer ersten Seite des ersten Möbelteils eine Aufnahme zur Aufnahme des Verbindungsbeschlags vorgesehen, in welche der Verbindungsbeschlag eingebracht und mittels des Einschraubgewindes verschraubt ist. Weiter ist ein am zweiten Möbelteil befestigtes Verbindungselement vorgesehen, welches in die Öffnung des Verbindungsbeschlags in der Einschubrichtung eingeschoben und darin mittels des Fixierelements gesichert ist.

Die Erfindung wird nachfolgend anhand der Figuren 1 bis 4 näher erläutert.
Figur 1 zeigt eine perspektivische transparente Ansicht eines erfindungsgemäßen Verbindungsbeschlages.
Figur 2 zeigt eine Längsschnittansicht durch einen erfindungsgemäßen Verbindungsbeschlag gemäß einer ersten Ausführungsform.
Figur 3 zeigt eine Längsschnittansicht durch einen erfindungsgemäßen Verbindungsbeschlag gemäß einer zweiten Ausführungsform.
Figur 4 zeigt eine perspektivische Ansicht auf einen Teil eines erfindungsgemäßen Schraubwerkzeugs.

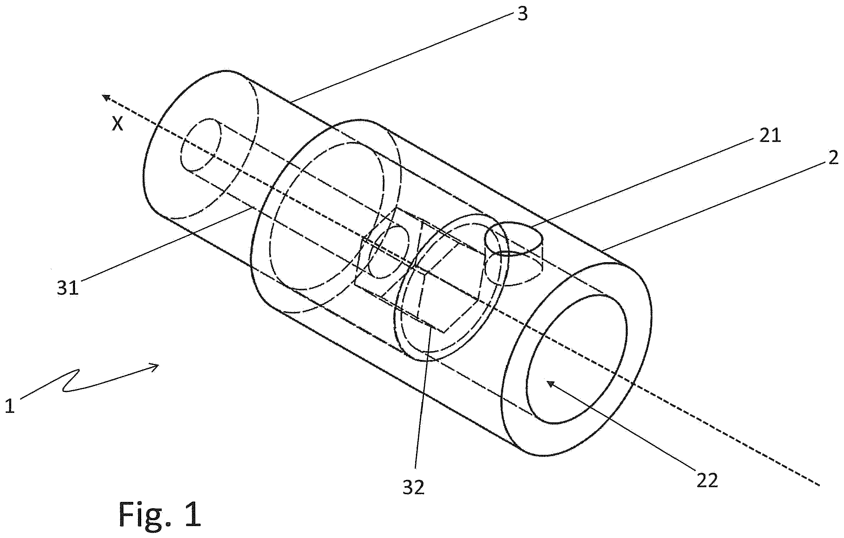

Der in Figur 1 dargestellte Verbindungsbeschlag 1 weist einen Grundkörper 2 auf, der bevorzugt - wie bevorzugt der übrige Verbindungsbeschlag - rotationssymmetrisch oder zumindest mit kreisförmiger Hüllfläche ausgebildet ist. Der Grundkörper 2 weist eine Öffnung 22 auf, die in den Innenraum des Grundkörpers 2 führt. Erfindungsgemäß wird dieser Verbindungsbeschlag 1 in ein erstes Möbelteil eingeschoben und sodann wird ein hier nicht dargestelltes Verbindungselement durch die Öffnung 22 in den Innenraum des Grundkörpers 2 eingeschoben und im Innenraum fixiert. Dies geschieht durch ein hier nicht dargestelltes Fixierelement, welches beispielsweise eine Fixierschraube sein kann, die z. B. in Gestalt einer Madenschraube ausgebildet sein kann. Eine solche Fixierschraube könnte dann beispielsweise durch ein entsprechendes Gewindeloch 21 in den Innenraum des Grundkörpers 2 eingeschraubt werden, um ein Verbindungselement, beispielsweise einen Bolzen oder dergleichen, welches an einem zweiten Möbelteil angebracht ist, zu fixieren.

Zunächst ist allerdings der erfindungsgemäße Verbindungsbeschlag 1 in einem ersten Möbelteil zu befestigen. Dazu dient ein Einschraubgewinde 3, welches sich in Einschubrichtung X axial an den im Wesentlichen zylindrischen Grundkörper 2 anschließt. Das Einschraubgewinde 3 kann Teil eines separaten Bauteils sein, welches mit dem Grundkörper 2 verbunden ist, kann aber auch mit diesem einstückig ausgebildet sein. Im Bereich des Übergangs zwischen dem Grundkörper 2 und dem Einschraubgewinde 3 ist eine erste Werkzeugaufnahme 32 angeordnet, die - deren vordere Öffnung - von der Öffnung 22 des Grundkörpers 2 beabstandet ist und daher im Innenraum des Grundkörpers 2 erst beginnt. Dies hat den Vorteil, dass die Werkzeugaufnahme 32 so platziert ist, dass ein Schraubwerkzeug, welches in die Werkzeugaufnahme 32 eingeführt wird, primär die Drehkraft auf das Einschraubgewinde 3 und nicht, oder überwiegend nicht, auf den Grundkörper 2 ausübt. Der Abschnitt 3 mit dem Einschraubgewinde 33 kann eine Axialbohrung 31 aufweisen, die es ermöglicht, dass zumindest ein Teil des Schraubwerkzeugs (hier nicht gezeigt) durch die Werkzeugaufnahme 32 hindurch in die Axialbohrung 31 hineinreichen kann.

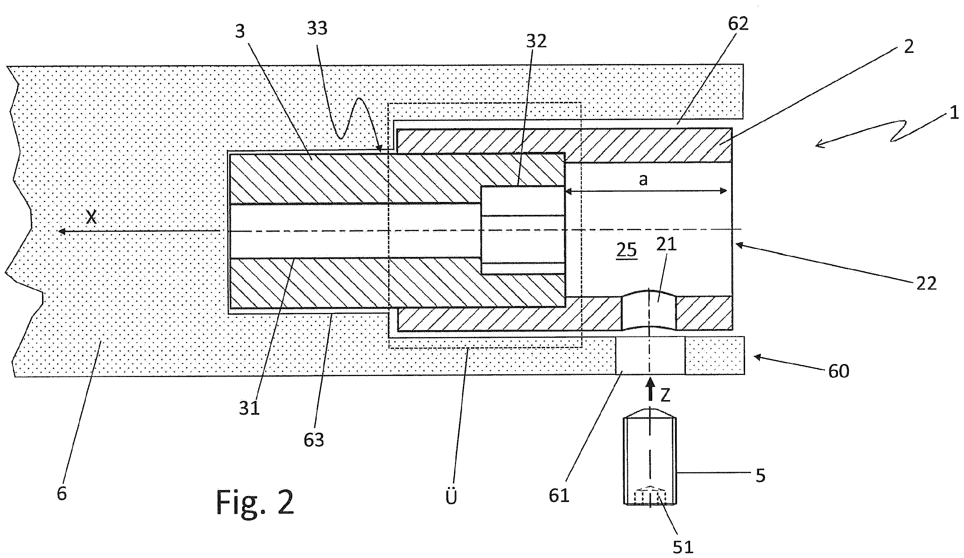

In Figur 2 ist in Längsschnittansicht entlang der Einschubrichtung X dargestellt, wie der erfindungsgemäße Verbindungsbeschlag 1 in ein erstes Möbelteil 6 eingesetzt ist. Bevorzugt wird der Verbindungsbeschlag 1 in die Schmalseite 60 des ersten Möbelteils 6 eingesetzt. Dazu ist im Innern des ersten Möbelteils 6 eine Aufnahme 62, 63 vorgesehen, die beispielsweise durch Bohren, z. B. mit einem Stufenbohrer, oder Fräsen in das Möbelteil 6 eingebracht werden kann. Man erkennt, dass der Grundkörper 2 in einem ersten Bereich 62 der Aufnahme 62, 63 Platz findet. Ein bevorzugt demgegenüber im Querschnitt verjüngter Bereich 63 schließt sich in axialer Richtung, d. h. in Einschubrichtung X, an den Bereich 62 an. In den Bereich wird das Einschraubgewinde 33 eingeschraubt, indem ein Werkzeug in die erste Werkzeugaufnahme 32 eingeführt und um eine Achse parallel zur Einschubrichtung X gedreht wird. Die Endposition bzw. Drehung muss dabei so durchgeführt werden, dass die Gewindebohrung 21 mit einem Loch 61 in einer Flächenseite des ersten Möbelteils 6 fluchtet, damit ein Fixierelement 5, beispielsweise eine Fixierschraube, bevorzugt in zur Richtung X senkrechten Richtung Z eingeschraubt oder eingebracht werden kann. Wird eine Fixierschraube 5, z. B. in Gestalt einer Madenschraube, verwendet, so weist diese eine zweite Werkzeugaufnahme 51 auf, in welche mit einem Schraubwerkzeug eingegriffen werden kann.

Man erkennt weiter, dass erfindungsgemäß in Einschubrichtung X betrachtet, die Werkzeugaufnahme 32 - genauer deren Anfang - um einen Abstand a von der Öffnung 22 ins Innere 25 des Grundkörpers 2 versetzt ist. Die Werkzeugaufnahme 32 befindet sich also in einem Übergangsbereich Ü, der den Übergang zwischen dem Grundkörper und im Abschnitt 3 bzw. dem Einschraubgewinde 33 markiert. Dies hat den Vorteil, dass Kräfte, die von einem Einschraubwerkzeug auf die Werkzeugaufnahme 32 ausgeübt werden, im Wesentlichen in den Abschnitt 3 bzw. dessen Gewinde 33 eingeleitet werden, sodass Kräfte auf den übrigen Grundkörper 2 und damit mögliche Beschädigungen des Verbindungsbeschlages im Wesentlichen vermieden werden.

Natürlich können auch andere Fixierelemente 5 verwendet werden, beispielsweise ist es möglich, im Innenraum 25 des Grundkörpers 2 ein Exzentergehäuse zu platzieren, welches dann einen Bolzen oder ein anderes Verbindungselement aufnimmt und fixiert. Die Öffnung 21 wäre dann in einem solchen Fall bevorzugt eine einfache Bohrung ohne Gewinde, durch die ein Schraubwerkzeug in den Innenraum 25 des Grundkörpers 2 eingeführt werden kann.

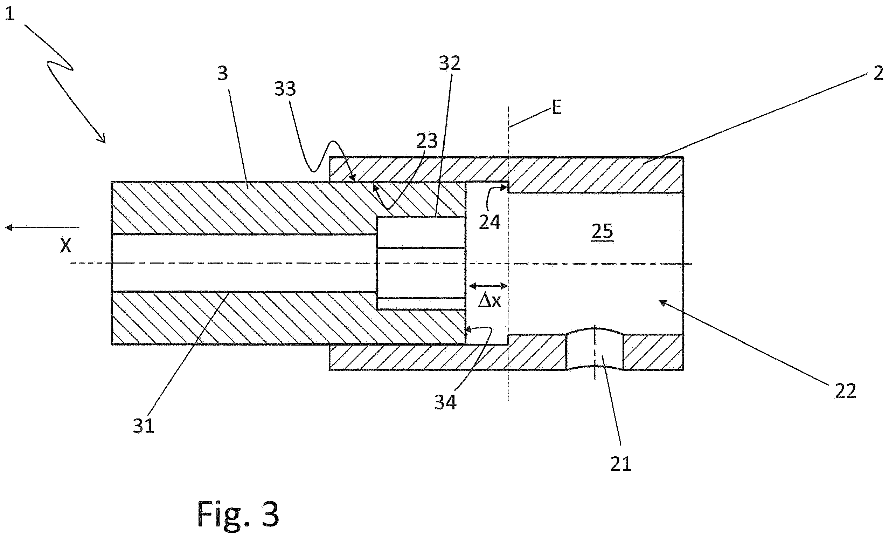

Der erfindungsgemäße Verbindungsbeschlag kann, wie in Figur 2 zu sehen, einstückig ausgebildet sein, es ist allerdings auch möglich, dass - wie in Figur 3 dargestellt - der Grundkörper 2 und der Abschnitt 3, der das Einschraubgewinde 33 aufweist, separate Bauteile sind, wobei im gezeigten Beispiel der Figur 3 das Einschraubgewinde 33 oder ein zusätzliches Gewinde an dieser Stelle, in eine entsprechende Gewindeaufnahme 23 des Grundkörpers 2 eingeschraubt ist. Denkbar ist auch, dass das Bauteil 3 relativ zum Bauteil 2 lediglich drehbar gelagert ist. Sind die Teile 2 und 3 mit einem Gewinde miteinander verbunden, so erfolgt beim Einschrauben des Abschnitts 3 in das erste Möbelteil eine relative Verlagerung zwischen dem Abschnitt 3 und dem Grundkörper 2, was in der Zeichnung durch den Abstand Dx dargestellt ist. Bei dieser Bauform kann der Grundkörper 2 bevorzugt einen Anschlag 24 aufweisen, gegen den ein stirnseitiger Teil 34 des Abschnitts 3 anschlägt. Die mehrteilige Ausführung des Verbindungsbeschlags hat den Vorteil, dass eine Bohrung 21 dann leichter relativ zu dem Loch 61 im ersten Möbelteil zu positionieren ist. Im Falle der einstückigen Variante des erfindungsgemäßen Verbindungsbeschlags kann es erforderlich sein, mehr als eine entsprechende Bohrung 21, mit oder ohne Gewinde, im Grundkörper 2 vorzusehen.

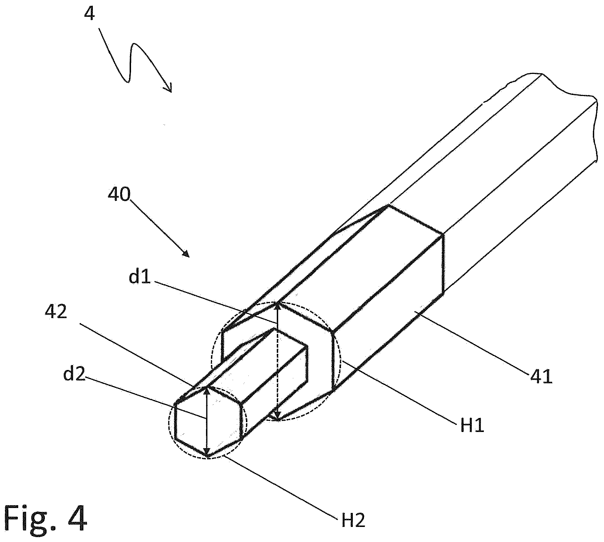

Bei dem dargestellten Beispiel kommen Werkstückaufnahmen 32 und 51 vor, die in aller Regel einen unterschiedlichen Querschnitt aufweisen. Normalerweise wären zur Montage daher zwei verschiedene Schraubwerkzeuge erforderlich. Erfindungsgemäß wird mit Blick auf Figur 4 ein Schraubwerkzeug vorgestellt, welches in der Lage ist, den erfindungsgemäßen Verbindungsbeschlag vollständig zu montieren.

In Figur 4 ist ein Abschnitt eines erfindungsgemäßen Schraubwerkzeugs 4 dargestellt (ein Griff oder dergleichen ist nicht gezeigt). Das Schraubwerkzeug 4 weist einen Endabschnitt oder ein Ende 40 auf. Im vorliegenden Fall in Gestalt eines Sechskantschraubers, andere Querschnitte, auch Kombinationen derselben, wie zum Beispiel Torx oder Kreuzschlitz, sind ebenfalls denkbar. Dieser Endabschnitt weist einen breiteren ersten Abschnitt 41 und einen im Vergleich dazu sich axial anschließenden schmaleren zweiten Abschnitt 42 auf. Der erste Abschnitt 41 ist so ausgelegt, dass er form- oder kraftschlüssig in die erste Werkzeugaufnahme 32 eingeführt werden kann, um das Einschraubgewinde 33 in das erste Möbelteil 6 einzuschrauben, vgl. Figur 2. Dieser Abschnitt 41 weist eine kreisförmige oder zylindrische Hüllfläche H1 (hier durch eine gestrichelte Kreislinie angedeutet) auf, die einen ersten Durchmesser d1 aufweist. Entsprechend weist der am äußersten des Werkzeugs 4 gelegene Abschnitt 42 eine kreisförmige oder zylindrische Hüllfläche H1 (hier durch eine gestrichelte Kreislinie angedeutet) auf, die einen zweiten Durchmesser d2 aufweist, wobei bevorzugt d1 > d2 gilt. Mithilfe dieses Schraubwerkzeugs 4 lässt sich also zunächst (mit Blick auf Figur 2) der erste Abschnitt 41 in die erste Werkzeugaufnahme 32 einführen, wobei dann der zweite Abschnitt 42 in der Bohrung 31 Platz findet. Ist das Einschraubgewinde 33 hinreichend weit in den Bereich 63 des ersten Möbelteils 6 eingeschraubt und der Grundkörper 2 mit seiner Bohrung 21 bzw. einer seiner Bohrungen fluchtend zum Loch 61 ausgerichtet, wird das Werkzeug 4 wieder herausgezogen. Sodann wird mit demselben Werkzeug 4, durch Einführen des zweiten Abschnitts 42 in die zweite Werkstückaufnahme 51 des Fixierelements 5, dieses durch das Loch 61 in die Bohrung 21 eingeschraubt und ein (nicht gezeigtes) Verbindungselement im Innern 25 des Grundkörpers fixiert, um dadurch eine erfindungsgemäße Möbelteilverbindungsanordnung zu schaffen.

## Patentansprüche

1. Verbindungsbeschlag (1) zum Einbringen in eine Aufnahme (62) eines ersten Möbelteils (6) in einer Einschubrichtung (X), aufweisend einen Grundkörper (2) mit einer Öffnung (22) zur Aufnahme eines mit einem zweiten Möbelteil verbindbaren Verbindungselements, insbesondere Bolzens, wobei der Grundkörper (2) ein Fixierelement (5) zum Fixieren des Verbindungselements in dem Grundkörper (2) umfasst, wobei der Verbindungsbeschlag (1) ein sich an den Grundkörper (2) in der Einschubrichtung (X) axial anschließendes Einschraubgewinde (33) umfasst, welches eine durch die Öffnung (22) zugängliche und von der Öffnung (22) in Einschubrichtung (X) beabstandete erste Werkzeugaufnahme (32) aufweist.

2. Verbindungsbeschlag (1) nach Anspruch 1,
**dadurch gekennzeichnet,**
**dass** die erste Werkzeugaufnahme (32) einen Abstand (a) von der Öffnung (22) aufweist und bevorzugt im Übergangsbereich (Ü) von Einschraubgewinde (33) und Grundkörper (2) angeordnet ist.

3. Verbindungsbeschlag (1) nach Anspruch 1 oder 2,
**dadurch gekennzeichnet,**
**dass** das Einschraubgewinde (33) als Einschraubmuffe (3) ausgebildet ist, die mit einem in der in Einschubrichtung (X) vorauseilenden Stirnseite des Grundkörpers (2) vorgesehenen Gegengewinde (23) im Grundkörper (2) verschraubt oder drehbar verbunden ist.

4. Verbindungsbeschlag (1) nach einem der vorigen Ansprüche,
**dadurch gekennzeichnet,**
**dass** die erste Werkzeugaufnahme (32) einstückig mit dem das Einschraubgewinde (33) aufweisenden Teil des Verbindungsbeschlages (1) ausgebildet ist.

5. Verbindungsbeschlag (1) nach einem der vorigen Ansprüche,
**dadurch gekennzeichnet,**
**dass** das Einschraubgewinde (33) und der Grundkörper (2) einstückig ausgebildet sind.

6. Verbindungsbeschlag (1) nach einem der Ansprüche 2 bis 5,
**dadurch gekennzeichnet,**
**dass** der Grundkörper (2) einen Anschlag (24) zur Anlage der Einschraubmuffe (3) aufweist.

7. Verbindungsbeschlag (1) nach einem der vorigen Ansprüche,
**dadurch gekennzeichnet,**
**dass** das Fixierelement (5) eine in wenigstens eine im Grundkörper (2) vorgesehene Gewindebohrung (21) einsetzbare oder eingesetzte Fixierschraube (5) ist, wobei die axiale Richtung (Z) der Gewindebohrung (21) bevorzugt senkrecht zur Einschubrichtung (X) verläuft.

8. Verbindungsbeschlag (1) nach einem der vorigen Ansprüche,
**dadurch gekennzeichnet,**
**dass** der Grundkörper (2) eine Hüllfläche oder Außenkontur mit kreisförmigem Querschnitt aufweist.

9. Verbindungsbeschlag (1) nach einem der vorigen Ansprüche,
**dadurch gekennzeichnet,**
**dass** der Grundkörper (2) aus einem Metallmaterial, bevorzugt einem metallischen Vollmaterial oder Gussmaterial, ausgebildet ist.

10. Verbindungsbeschlag (1) nach einem der vorigen Ansprüche,
**dadurch gekennzeichnet,**
**dass** sich in Einschubrichtung (X) an den Abschnitt mit der ersten Werkzeugaufnahme (32) eine Axialbohrung (31) zur Aufnahme des Abschnitts (41) einer Werkzeugspitze (40) anschließt.

11. Verbindungsbeschlag (1) Anspruch 10,
**dadurch gekennzeichnet,**
**dass** die Axialbohrung (31) einen geringeren Durchmesser als die erste Werkzeugaufnahme (32) aufweist.

12. Möbelteilverbindungsanordnung mit einem ersten Möbelteil (6) und einem damit verbundenen zweiten Möbelteil sowie einem Verbindungsbeschlag (1) nach einem der vorigen Ansprüche, wobei in einer ersten Seite (60) des ersten Möbelteils (6) eine Aufnahme (62) zur Aufnahme des Verbindungsbeschlags (1) vorgesehen ist, in welche der Verbindungsbeschlag (1) eingebracht und mittels des Einschraubgewindes (33) verschraubt ist, wobei ein am zweiten Möbelteil befestigtes Verbindungselement vorgesehen ist, welches in die Öffnung (22) des Verbindungsbeschlags (1) in der Einschubrichtung (X) eingeschoben und darin mittels des Fixierelements (5) gesichert ist.

13. Schraubwerkzeug (4) zur Montage eines Verbindungsbeschlages (1) nach einem der Ansprüche 1 bis 11,
**dadurch gekennzeichnet,**
**dass** es einen ersten Eingriffsabschnitt (41) zum form- und/oder kraftschlüssigen Eingreifen in eine erste Werkzeugaufnahme (34) und einen zweiten Eingriffsabschnitt (42) zum form- und/oder kraftschlüssigen Eingreifen in eine weitere, von der ersten Werkzeugaufnahme (32) verschiedene zweite Werkzeugaufnahme (51) aufweist.

14. Schraubwerkzeug (4) nach Anspruch 13,
**dadurch gekennzeichnet,**
**dass** es ein von einem Griffabschnitt entferntes Ende (40) aufweist, wobei der zweite Eingriffsabschnitt (42) näher an diesem Ende (40) angeordnet ist und einen geringeren Hüllflächendurchmesser (d1, d2) aufweist als der erste Eingriffsabschnitt (41).
